(19) Europäisches Patentamt
European Patent Office
Office européen des brevets

(11) EP 2 944 679 A1

(12) **EUROPEAN PATENT APPLICATION**
published in accordance with Art. 153(4) EPC

(43) Date of publication:
**18.11.2015 Bulletin 2015/47**

(21) Application number: **14737586.9**

(22) Date of filing: **10.01.2014**

(51) Int Cl.:
***C09K 5/06*** *(2006.01)* ***B01J 13/14*** *(2006.01)*
***C08F 2/44*** *(2006.01)*

(86) International application number:
**PCT/JP2014/050865**

(87) International publication number:
**WO 2014/109413 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.01.2013 JP 2013002832**
**10.05.2013 JP 2013100361**
**31.05.2013 JP 2013115602**

(71) Applicant: **JX Nippon Oil & Energy Corporation**
**Chiyoda-ku**
**Tokyo 100-0004 (JP)**

(72) Inventors:
- **JIN, Zhengzhe**
  **Tokyo 100-0004 (JP)**
- **TAKASHIMA, Tsutomu**
  **Tokyo 100-0004 (JP)**
- **MORINAGA, Yoshihiro**
  **Tokyo 100-0004 (JP)**
- **KOBAYASHI, Masaaki**
  **Tokyo 100-0004 (JP)**

(74) Representative: **Twelmeier Mommer & Partner**
**Patent- und Rechtsanwälte**
**Westliche Karl-Friedrich-Strasse 56-68**
**75172 Pforzheim (DE)**

(54) **MICROCAPSULE HEAT STORAGE MATERIAL, PRODUCTION METHOD THEREOF AND USE THEREOF**

(57) In a microcapsule having a latent heat storage material having no vinyl group as a core material and a cross-linked polymer as a shell material, functions of the latent heat storage material is stably and efficiently expressed.

In a method of producing a microcapsule that is obtained by a polymerization reaction of at least two types of vinyl monomers using an O/W dispersion containing a latent heat storage substance having no vinyl group and the vinyl monomers as raw material, and has a core-shell structure in which a core is the latent heat storage substance having no vinyl group and a shell is a copolymer of at least two components of the vinyl monomers, the vinyl monomers contain a vinyl monomer having an electron withdrawing group and a vinyl monomer having an electron donating group and the method includes a step of continuously and successively passing the O/W dispersion through a plurality of net bodies that are provided along a flow path and disposed at certain intervals before the polymerization reaction, resulting in emulsification. The object is achieved by using the method of producing a microcapsule.

FIG. 1

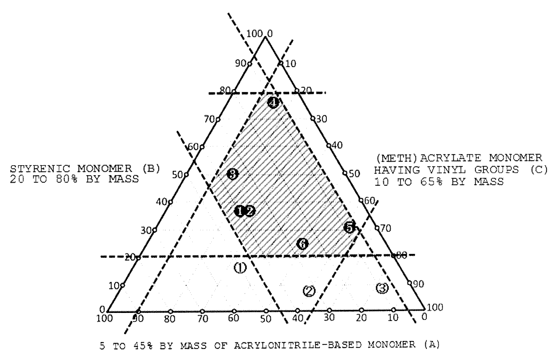


EP 2 944 679 A1

Printed by Jouve, 75001 PARIS (FR)

## Description

### Technical Field

The present invention relates to a microcapsule heat storage material having an organic latent heat storage substance having no vinyl group such as an n-paraffin as a core material and a cross-linked body of a copolymer of two or more types of vinyl monomers as a shell material, and a method of producing the same and use of the same.

In particular, the present invention relates to a microcapsule heat storage material having an n-paraffin-based latent heat storage substance as a core material and a cross-linked copolymer of vinyl monomers as a shell material, in which endothermic behavior is exhibited during combustion, that is, an endothermic peak is shown on a TG-DTA characteristic curve during a temperature-rising process, and a method of producing the same and use of the same for a house construction material.

Further, the present invention relates to a method of producing the microcapsule heat storage material by emulsion polymerization, suspension polymerization, or the like, and a drying step, which are especially effective in uniformly and effectively expressing an effect of the above-mentioned microcapsule heat storage material.

### Background Art

In recent years, an application field of a microcapsule heat storage material is continuously expanding. For this reason, the chemical structure, mechanical strength, shape, particle diameter distribution, and the like of a shell have attracted attention as elemental technologies of determining the function of the microcapsule heat storage material. From the viewpoint of each of the elemental technologies, various microcapsules represented by a heat storage material microcapsule and methods for producing the same have been proposed (Patent Literatures 1 to 8).

Patent Literature 1 discloses the use, as a latent heat storage material, of a microcapsule including a lipophilic substance (for example, branched or linear $C_{10}$ to $C_{40}$-hydrocarbon, and cyclic hydrocarbon) having a solid/liquid phase transition within a specific temperature range as a core material, and as a shell material, a polymer obtained by dissolving an initiator in a monomer mixture containing an alkyl ester (monomer I) having a specific number of carbon atoms such as acrylic acid; a bifunctional or polyfunctional monomer (monomer II, polyvinyl monomer such as DVB, EGDMA, and TMPT); and another monomer (monomer III, for example, styrene), followed by radical polymerization, and a method of producing the same. Patent Literature 1 describes that the particle diameter of the obtained microcapsule is 1 to 30 $\mu$m, but does not describe the particle diameter distribution. In addition, assuming an emulsification method using a homogenizer stirrer, a microcapsule having narrow particle diameter distribution would not be obtained.

Patent Literature 2 discloses a microcapsule that is used as a heat storage material and has excellent heat storage performance, in which a core substance (for example, wax such as aliphatic hydrocarbon) that is a phase-changing substance that stores or radiates latent heat with phase change is coated with a capsule wall of a thermoplastic resin obtained by polymerization of a polymerizable monomer (for example, MMA) using trimethylolpropane trimethacrylate (TMPT) as a crosslinking agent. Patent Literature 2 discloses that the microcapsule is a single-hole microcapsule in which the core substance is contained in the capsule wall as a continuous coating. However, a high-speed stirring with a homogenizer is used as a method of dispersing an oil phase, and the microcapsule has a particle diameter as large as 20 to 30 $\mu$m. Therefore, although the particle diameter distribution is not disclosed, the particle diameter distribution is assumed to be large from the viewpoint of the dispersion method.

Patent Literature 3 discloses a heat storage microcapsule obtained by stirring, dispersing, and mixing a polymerization monomer solution containing a radically polymerizable monomer (for example, MMA) as the same component as in Patent Literature 2, an aliphatic hydrocarbon, a polymerization initiator, and a bifunctional crosslinkable vinyl monomer and an aqueous dispersion medium containing a dispersion stabilizer at a high speed with a homogenizer, and polymerizing the resultant suspended dispersion at 80°C for a predetermined time. Patent Literature 3 discloses that since a capsule wall as a shell material is hardly ruptured and a core substance hardly leaks out, a microcapsule having high heat storage performance can be obtained. The microcapsule has a particle diameter as large as 10 to 60 $\mu$m and the homogenizer is used in dispersion. Therefore, the particle diameter distribution is assumed to be large from the viewpoint of a method of producing the microcapsule.

Patent Literature 4 discloses a heat storage capsule that is as tough as it is hardly ruptured even during using it as a heat transport medium, and a method of producing the same. In the disclosed heat storage capsule, a heat storage material is placed in a hollow part of a hollow capsule including a shell and the hollow part, and the shell includes a layer composed of a polymer or a copolymer of a crosslinkable monomer or a copolymer of a crosslinkable monomer and a monofunctional monomer. However, Patent Literature 4 discloses that as a method of dispersing an aqueous solution of a dispersion stabilizer, the heat storage material, and a monomer mixture, a known method including a dispersion method using mechanical shearing force such as a homogenizer and membrane emulsification can be adopted. Therefore, the particle diameter distribution of a microcapsule obtained is assumed to be large.

Patent Literature 5 discloses a method of producing a particulate heat storage material that includes porous fine particles, a latent heat storage substance retained in pores of the porous fine particles, and a film-forming substance with which the porous fine particles are coated, does not allow the latent heat storage substance to leak, is inexpensive, and has excellent productivity and heat storage efficiency. Patent Literature 5 discloses that it is preferable that the latent heat storage substance is a $C_8$ to $C_{40}$ n-paraffin.

Patent Literature 6 is a patent application of a former company which is succeeded by the present applicant. Patent Literature 6 discloses an emulsification device in which the particle diameter and the particle diameter distribution can be easily controlled, maintenance is simple, and a sufficient production amount suitable for industrial production can be secured in an emulsification apparatus. Patent Literature 6 discloses an emulsification method in which a plurality of types of liquids substantially immiscible with each other are caused to successively and continuously pass through a plurality of net bodies that are disposed at certain intervals in the presence of an emulsifier, the net bodies are provided in a cylindrical flow path, and a predetermined number of wire meshes are disposed at certain intervals in the cylindrical flow path. Also disclosed is an emulsification device for the method. Patent Literature 6 further discloses a microcapsule produced using an emulsion obtained by the emulsification device. However, Patent Literature 6 does not specifically disclose a microcapsule having a core-shell structure in which a core material is a latent heat storage substance having no vinyl group and a shell material is a polymer of a vinyl monomer, like the present application.

Patent Literature 7 discloses microcapsule particles for a heat storage material in which the heat storage material hardly leaks even after exposure in high-temperature environment for extended periods of time and the heat resistance is excellent. The disclosed microcapsule particles for a heat storage material have a capsule wall of a crosslinkable resin and a heat storage material encased in the wall. In the microcapsule particles, the crosslinkable resin includes a polymerizable monomer containing a polyfunctional polymerizable monomer, the heat storage material is a polyfunctional fatty acid ester having a number average molecular weight (Mn) of 1, 300 to 4, 000, and the content of the heat storage material is 30 to 100 parts by weight relative to 100 parts by weight of the resin. Patent Literature 7 discloses that the particles have a volume average particle diameter (Dv) of 3 to 50 $\mu$m and the particle diameter distribution that is a ratio of Dv to the number average particle diameter (Dn) is 1 to 1.8. Patent Literature 7 discloses that in a dispersion treatment for formation of droplets, a device capable of strong stirring such as an in-line emulsification dispersion device and a high-speed emulsification dispersion device (T. K. homomixer) is used, but does not disclose that microcapsule particles having narrow particle diameter distribution of which the CV value is 30% or less.

Patent Literature 8 discloses a microcapsule dispersion containing a low content of microcapsules having a diameter of 4 $\mu$m or less. Further, Patent Literature 8 discloses a microcapsule that is obtained by radical polymerization of an oil-in-water emulsion containing an acrylic acid ester or a methacrylic acid ester, a polyfunctional monomer, another monomer, a lipophilic substance, and inorganic solid particles, and includes the lipophilic substance as a core material and a polymer as a shell material, and a method of producing the same and a plaster board containing the same.

However, these known arts only propose each elemental technology separately, as described above, and do not propose a comprehensive solution of all the elemental technologies. In particular, there is no proposal about a microcapsule heat storage material that easily achieves both heat storage properties and flame retardant properties of a house construction material in use thereof for the house construction material. The present inventors have considered that a microcapsule exhibiting endothermic characteristics during a process of heating from 200 to 500°C in the assumption of fire solves the problems. However, preceding documents of related art that discloses the microcapsule have not been found.

Prior Art Literatures

Patent Literature

Patent Literature 1: Japanese Translation of PCT Patent Application Publication No. 2002-516913
Patent Literature 2: Japanese Patent Application Laid-Open No. 2004-203978
Patent Literature 3: Japanese Patent Application Laid-Open No. 2004-277646
Patent Literature 4: Japanese Patent Application Laid-Open No. 2006-257415
Patent Literature 5: Japanese Patent Application Laid-Open No. 2008-144054
Patent Literature 6: Japanese Patent Application Laid-Open No. 2009-090191
Patent Literature 7: Japanese Patent Application Laid-Open No. 2010-150329
Patent Literature 8: Japanese Patent Application Laid-Open No. 2012-011384

Summary of Invention

Technical Problem

In order to comprehensively solve the problems of each of the above-described elemental technologies in the known art, the inventors have studied intensively. As a result, the inventors have succeeded in controlling a chemical structure and a cross-linked structure of a vinyl monomer copolymer constituting a shell to secure various functions such as suppression of vaporization of a volatile organic compound (VOC), a decrease in loss on heating, and expression of endothermic behavior during combustion in a microcapsule heat storage material. The inventors have also found that when a specific emulsifying step and a specific drying step are incorporated into a production process, the above-described functions and foregoing functions can be expressed effectively. Thus, the present invention has been completed.

Means for Solving Problems

A first aspect of the present invention relates to a microcapsule heat storage material that is obtained by a cross-linking copolymerization reaction of vinyl monomers in an O/W dispersion containing a latent heat storage substance having no vinyl group and a group of at least two or more types of vinyl monomers containing a vinyl monomer having cross-linking ability, and has a core-shell structure in which a material constituting a core (hereinafter referred to as a core material) is the latent heat storage substance having no vinyl group and a material constituting a shell (hereinafter referred to as a shell material) is a cross-linked copolymer including the vinyl monomer group. In the microcapsule heat storage material, the latent heat storage substance having no vinyl group is an n-paraffin-based latent heat storage material, and the vinyl monomer group contains at least one type of vinyl monomer having an electron withdrawing group and at least one type of vinyl monomer having an electron donating group, which are different from each other.

A second aspect of the present invention relates to the microcapsule heat storage material according to the first aspect of the present invention, wherein in the cross-linked copolymer constituting the shell material, the vinyl monomer having an electron withdrawing group contains any of an acrylonitrile-based monomer and an acrylic monomer (including a polyfunctional acrylate monomer having a plurality of vinyl groups having cross-linking ability), and the vinyl monomer having an electron donating group contains a styrenic monomer.

A third aspect of the present invention relates to the microcapsule heat storage material according to the first or second aspect of the present invention, wherein: the cross-linked copolymer constituting the shell material is a crosslinkable copolymer obtained from (A) an acrylonitrile-based monomer, (B) a styrenic monomer, and (C) a (meth)acrylate monomer having a plurality of vinyl groups; an amount of (A) % by mass $\geq$ 8, the amount of (A) % by mass $\geq$ an amount of (B) % by mass, and an amount of (C) % by mass $\geq$ 25, provided that a total amount of the monomers is 100% by mass; and the amount of a volatile organic compound (VOC: volatile substance under a condition of 100°C and 2 hours) is 7.0 mg/g or less.

A fourth aspect of the present invention relates to the microcapsule heat storage material according to the first or second aspect of the present invention that is obtained by the cross-linking copolymerization reaction of the vinyl monomers in the O/W dispersion containing the latent heat storage substance having no vinyl group and the group of at least two or more types of vinyl monomers containing the vinyl monomer having cross-linking ability, and has the core-shell structure in which the core material is the latent heat storage substance having no vinyl group and the shell material is the cross-linked copolymer including the vinyl monomer group, wherein the latent heat storage substance having no vinyl group is an n-paraffin-based latent heat storage material, the cross-linked copolymer constituting the shell material has a composition of 5 to 45% by mass of (A) an acrylonitrile-based monomer, 20 to 80% by mass of (B) a styrene monomer, and 10 to 65% by mass of (C) a polyfunctional (meth)acrylate monomer having a plurality of vinyl groups (provided that the total amount of the (A), (B), and (C) components is 100% by mass), and a TG-DTA temperature-increasing characteristic curve during a heating process from 200 to 500°C has an endothermic peak.

A fifth aspect of the present invention relates to the microcapsule heat storage material according to the fourth aspect of the present invention, wherein on the TG-DTA characteristic curve during the heating process from 200°C to 500°C, the sum of endotherm in the whole endothermic peak is larger than the sum of exotherm in the whole exothermic peak.

A sixth aspect of the present invention relates to the microcapsule heat storage material according to the fourth or fifth aspect of the present invention, wherein the amount of the core material is 20% by mass to 80% by mass and the amount of the shell material is 80% by mass to 20% by mass provided that the total amount of the core material and the shell material is 100% by mass.

A seventh aspect of the present invention relates to the microcapsule heat storage material according to any one of the first to sixth aspects of the present invention, wherein a CV value represented by the following equation (1) that is an indication of particle diameter distribution of the microcapsule heat storage material is 30% or less,

CV value = (standard deviation of droplet diameter distribution / volume average particle diameter) × 100 Equation (1).

An eighth aspect of the present invention relates to the microcapsule heat storage material according to any one of the first to sixth aspects of the present invention, wherein a CV value represented by the following equation (1) that is an indication of particle diameter distribution of the microcapsule heat storage material is 20% or less,

CV value = (standard deviation of droplet diameter distribution / volume average particle diameter) × 100 Equation (1).

A ninth aspect of the present invention relates to the microcapsule heat storage material according to any one of the first, second, and fourth to eighth aspects of the present invention that is obtained through a drying step by spray-drying.

A tenth aspect of the present invention relates to the microcapsule heat storage material according to the third aspect of the present invention that is obtained through a drying step by spray-drying.

An eleventh aspect of the present invention relates to the microcapsule heat storage material according to any one of the first, second, and fourth to ninth aspects of the present invention that is obtained through a step of continuously and successively passing the O/W dispersion through a plurality of net bodies that are provided along a flow path and disposed at certain intervals before the cross-linking copolymerization reaction, resulting in emulsification.

A twelfth aspect of the present invention relates to the microcapsule heat storage material according to the third aspect of the present invention that is obtained through a step of emulsifying the O/W dispersion using a homogenizer before the cross-linking copolymerization reaction.

A thirteenth aspect of the present invention relates to use of the microcapsule heat storage material according to any one of the first to tenth aspects of the present invention for a house construction material.

A fourteenth aspect of the present invention related to a method of producing a microcapsule that is obtained by a cross-linking copolymerization reaction of vinyl monomers in an O/W dispersion containing a latent heat storage substance having no vinyl group and a group of at least two or more types of vinyl monomers containing a vinyl monomer having cross-linking ability, and has a core-shell structure in which a core material is the latent heat storage substance having no vinyl group and a shell material is a cross-linked copolymer including the vinyl monomer group, wherein the vinyl monomers contain at least one type of vinyl monomer having an electron withdrawing group and at least one type of vinyl monomer having an electron donating group, which are different from each other, the method comprising a step of continuously and successively passing the O/W dispersion through a plurality of net bodies that are provided along a flow path and disposed at certain intervals before the polymerization reaction, resulting in emulsification.

A fifteenth aspect of the present invention relates to the method of producing a microcapsule according to the fourteenth aspect of the present invention, wherein the vinyl monomers in the O/W dispersion contain acrylonitrile and/or methacrylonitrile as the vinyl monomer having an electron withdrawing group and styrene as the vinyl monomer having an electron donating group.

A sixteenth aspect of the present invention relates to the method of producing a microcapsule according to the fourteenth or fifteenth aspect of the present invention, wherein the core material is a $C_8$ to $C_{40}$ hydrocarbon.

A seventeenth aspect of the present invention relates to the method of producing a microcapsule according to any one of the fourteenth to sixteenth aspects of the present invention, wherein the microcapsule has a CV value represented by the following equation (1) of 30% or less,

CV value = (standard deviation of drop diameter distribution / volume average particle diameter) × 100 Equation (1).

An eighteenth aspect of the present invention related to the method of producing a microcapsule heat storage material according to any one of the fifteenth to seventeenth aspects of the present invention, wherein the microcapsule heat storage material includes a cross-linked vinyl monomer copolymer obtained by suspension polymerization in the O/W dispersion as a shell material and an n-paraffin-based latent heat storage material as a core material, and a monomer composition in 100% by mass of the cross-linked vinyl monomer copolymer constituting the shell material includes
5 to 45% by mass of (A) an acrylonitrile-based monomer,
20 to 80% by mass of (B) a styrene monomer, and
10 to 65% by mass of (C) a polyfunctional acrylate monomer having a plurality of vinyl groups (provided that the total amount of the (A), (B), and (C) components is 100% by mass).
A nineteenth aspect of the present invention relates to the method of producing a microcapsule heat storage material according to the eighteenth aspect of the present invention, wherein the O/W dispersion obtained by the suspension polymerization is spray-dried using a spray drier.

Advantageous Effects of Invention

According to the present invention, a microcapsule heat storage material that expresses various functions such as a volatile organic compound (VOC), loss on heating, and endothermic behavior during heating with good balance can be obtained by using an n-paraffin having excellent stability as a core material and a specific copolymer or a cross-linked copolymer including a commercially available vinyl monomer group as a shell material. When a specific step of uniformly and effectively exerting the functions of the microcapsule heat storage material is incorporated into a process of producing the same or a step of drying a dispersion of the polymer, the CV value (a value determined by the equation: (standard deviation of droplet diameter distribution / volume average particle diameter) $\times$ 100) can be mainly controlled, and therefore, the functions can be further enhanced. In particular, when the microcapsule heat storage material that expresses various functions according to the present invention is used for construction materials such as a plaster board, a fiber reinforced plaster panel, a cement-based wood chipboard, a woody cement board, a light-weight foam concrete, a soil wall board, a calcium silicate board, a soft fiber board, a woody heat insulating material, a board of construction material, an interior material, a plastered wall, a heat insulating material, a heat shielding material, and wallpaper, the microcapsule heat storage material can act as a microcapsule heat storage material that can achieve both flame retardant properties and heat storage properties.

Brief Description of Drawings

FIG. 1 is a three-component composition diagram illustrating an overview of composition region showing endothermic behavior in a microcapsule according to the present invention that has a shell material formed from (A) an acrylonitrile-based monomer, (B) a styrenic monomer, and (C) an acrylate monomer having a plurality of vinyl groups.
FIG. 2 is a perspective view showing parts for decomposition of an emulsification device for production of the microcapsule of the present invention.
FIG. 3 is a perspective view of a spacer c that keeps a net body of the emulsification device and determines an interval.
FIG. 4 is a cross-sectional view of the emulsification device.
FIG. 5 is a flow chart showing an example of a production line of a microcapsule heat storage material according to the present invention including a spray-drying step.

Description of Embodiments

A latent heat storage substance according to the present invention is a phase-changing substance that can store or radiate latent heat with liquid-solid phase change. The percentage of the latent heat storage substance in the microcapsule heat storage material of the present invention preferably falls within a range of 20 to 90% by mass, and more preferably 35 to 75% by mass. When the percentage of the latent heat storage substance is less than 20% by mass, the amount of latent heat stored in the latent heat storage substance is insufficient, and the function of a heat storage material cannot be sufficiently exerted. Therefore, it is not preferred. When the percentage of the latent heat storage substance exceeds 90% by mass, the volume of the latent heat storage substance may exceed the volume of a microcapsule due to volume expansion during phase change of the latent heat storage substance from solid to liquid. This causes the latent heat storage substance to leak outside the microcapsule (bleed-out). Therefore, it is not preferred.
As the latent heat storage substance used in the present invention, an organic compound that has low corrosiveness, does not have defects in terms of stability and durability, such as modification and degradation with repeated heat storage-heat radiation cycle, and has a melting point of -20°C or higher and 120°C or lower can be used. Preferred

examples of the latent heat storage substance may include an aliphatic hydrocarbon (hereinafter referred to as a paraffin compound), an aromatic hydrocarbon, a fatty acid, and an alcohol. From the viewpoint of amount of melting latent heat and stability of behavior of melting and solidification, it is particularly preferable that the latent heat storage substance may be an n-paraffin.

The number of carbon atoms of n-paraffin according to the present invention is not particularly limited, and preferably falls within a range of $C_8$ to $C_{40}$, and more preferably $C_{14}$ to $C_{20}$. Paraffins having two or more types of numbers of carbon atoms may be mixed as main components and used. In particular, it is preferable that an n-paraffin having an even number of carbon atoms within the range of $C_{14}$ to $C_{20}$ be a main component from the viewpoint of a temperature that lead to the phase transition and the amount of latent heat.

From the viewpoint of use field of the microcapsule heat storage material, in a field of house construction material, a paraffin containing a $C_{15}$ to $C_{18}$ paraffin having a phase transition temperature (about 10 to 28°C) that falls within a temperature range suitable for living environment as a main component is preferred. In a field of air conditioner, a paraffin containing a $C_{14}$ to $C_{18}$ paraffin having a phase transition temperature that falls within a temperature range suitable for an air conditioner as a main component is preferred. In a field of refrigerant, a paraffin containing a $C_{12}$ to $C_{16}$ paraffin having a phase transition temperature (about -12 to 18°C) that falls within a temperature range demanded for refrigeration as a main component is preferred. In a field of a constant-temperature transport material, a paraffin containing a $C_{14}$ to $C_{18}$ paraffin having a phase transition temperature (about 6 to 28°C) that falls within a temperature range demanded for application of transport at constant temperature as a main component is preferred, and in a field of clothing, a paraffin containing a $C_{16}$ to $C_{20}$ paraffin having a phase transition temperature (about 18 to 37°C) that falls within a temperature range required for application of clothing as a main component is preferred.

In order to sufficiently exert the function of the microcapsule heat storage material containing the latent heat storage substance, the latent heat amount of the latent heat storage substance is preferably 100 J/g or more, and particularly preferably 150 to 250 J/g.

To the latent heat storage substance used in the present invention, an additive such as a usually used additive including an antioxidant and an ultraviolet radiation absorber, a supercooling prevention agent, a specific gravity adjuster, a colorant such as a pigment and a dyestuff, and a fragrance may be added so long as the object of the present invention is not impaired.

A vinyl monomer in an O/W dispersion to be subjected to a polymerization reaction according to the present invention contains a vinyl monomer having an electron withdrawing group and a vinyl monomer having an electron donating group. Examples of the vinyl monomer having an electron withdrawing group may include alkyl esters of acrylic acid or methacrylic acid (wherein the alkyl group usually has 1 to 32 carbon atoms). Specific examples thereof may include methyl acrylate, ethyl acrylate, n-propyl acrylate, isopropyl acrylate, n-butyl acrylate, isobutyl acrylate, tert-butyl acrylate, corresponding methacrylic acid esters, acrylonitrile or methacrylonitrile, acrylic acid, methacrylic acid, itaconic acid, maleic acid, maleic anhydride, 2-hydroxyethyl acrylate and 2-hydroxyethyl methacrylate, acrylamide and methacrylamide, N-methylol acrylamide and N-methylol methacrylamide, methyl vinyl ketone, and vinylidene cyanide, etc. Examples of the vinyl monomer having an electron donating group may include styrene, $\alpha$-methylstyrene, p-chlorostyrene, butadiene, isoprene, isobutyl vinyl ether, vinyl acetate, vinyl propionate, 4-vinylpyridine, and N-vinyl pyrolidone, etc.

The vinyl monomer having an electron withdrawing substituent has a positive e value that represents the electron density of double bond involved in a polymerization reaction in a vinyl compound (this value is described in Takayuki Otsu, "Kobunshigosei no kagaku" (Kagaku monograph 15), 1968, published by Kagaku-Dojin Publishing Co., Inc.), and usually has a non-polar (hydrophobic) substituent. The vinyl monomer having an electron donating group has a negative e value, and usually has a polar (hydrophilic) substituent.

The vinyl monomer compounds are combined to allow the electron withdrawing group and the electron donating group to attract each other, forming a charge transfer complex, and alternating copolymerization may be caused. Therefore, in a polymer constituting a shell according to the present invention, a probability of localizing a non-polar group and a polar group is small. Accordingly, the hydrophobicity and the hydrophilicity of chemical structure of the shell are homogenized. From the viewpoint of the shape of the microcapsule, the microcapsule can have a spherical, pseudospherical, or flat shape, which are considered to be a preferable shape. From the viewpoint of permeation or leakage of the core material, local permeation or leakage thereof may be prevented.

The vinyl monomers are added at an equal ratio by mole to achieve intermediate properties of polymers of both vinyl monomers. When the permeation of the core material outside the microcapsule is preferentially accelerated, a vinyl monomer having higher affinity to the core material among the vinyl monomers is relatively increased. When the leakage is preferentially prevented, the vinyl monomer having higher affinity to the core material is relatively decreased. The ratio by mole is usually adjusted within a range of 20:80 to 80:20. When the ratio does not fall within this range, an effect due to the presence of both non-polar group and polar group may not be achieved.

Examples of combinations of the vinyl monomers are shown below. These combinations of the vinyl monomers are known to produce an alternating copolymer, and have a difference ($\Delta$e) of e values of 1.0 or more, preferably 1.30 or more, and further preferably 1.50 or more. Specifically, the vinyl monomer compound having an electron withdrawing

group is selected from vinyl chloride (e value = 0.16), methyl methacrylate (e value = 0.40), methyl acrylate (e value = 0.60), methyl vinyl ketone (e value = 0.68), acrylonitrile (e value = 1.20), methacrylonitrile (e value = 1.00), acrylamide (e value = 1.30), maleic anhydride (e value = 2.25), and vinylidene cyanide (e value = 2.58). The vinyl monomer compound having an electron donating substituent is selected from α-methylstyrene (e value = -1.27), styrene (e value = -0.80), isoprene (e value = -0.55), vinyl acetate (e value = -0.88), and isobutylene (e value = -1.20) (including estimates based on sources: Takayuki Otsu, "Kobunshigosei no kagaku," and "Kisokobunshikagaku" edited by The Society of Polymer Science, Japan, and references thereof) . Further, a polyfunctional acrylate monomer having a plurality of vinyl groups described below is also included in the vinyl monomers.

Among these combinations, a combination of an acrylonitrile-based monomer and a styrenic monomer is particularly preferred in consideration of reactivity of the vinyl monomer compounds and alternating copolymerization reactivity in addition to the difference between the e values.

The acrylonitrile-based monomer is a compound having a structure represented by the general formula (1). Two or more types thereof may be used. From the viewpoint of reactivity with the styrenic monomer and the polyfunctional acrylate monomer having a plurality of vinyl groups, specific preferred examples of the acrylonitrile-based monomer may include acrylonitrile, methacrylonitrile, α-ethylacrylonitrile, and α-isopropylacrylonitrile. Acrylonitrile and methacrylonitrile are more preferred. In consideration of safety during handling, methacrylonitrile is further preferred since the boiling point of methacrylonitrile at normal pressure is 90°C, and is higher than 77°C that is the boiling point of acrylonitrile.

[Chemical Formula 1]

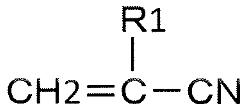

(1)

wherein R1 is a hydrogen atom or an optional substituent, and preferably a hydrogen atom or an alkyl group having 1 to 3 carbon atoms.

The styrenic monomer is a compound represented by the general formula (2). Two or more types thereof may be used. From the viewpoint of reactivity with the acrylonitrile-based monomer and the polyfunctional acrylate monomer having a plurality of vinyl groups, specific preferred examples of the styrenic monomer may include monofunctional styrenic monomers such as styrene, o-, m-, and p-methylstyrenes, α-methylstyrene, p-methoxystyrene, p-tert-butylstyrene, p-phenylstyrene, o-, m-, and p-chlorostyrenes, o-, m-, and p-ethylstyrenes, and polyfunctional styrenic monomers such as divinyl benzene and divinyl naphthalene. Of the monofunctional styrenic monomers, styrene is further preferred, and of the polyfunctional styrenic monomers, divinyl benzene is further preferred.

[Chemical Formula 2]

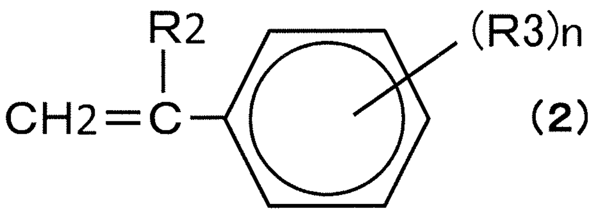

(2)

wherein R2 and R3 (n is any integer of 1 to 5) are each independently a hydrogen atom or any substituent, and preferably a hydrogen atom, an alkyl group having 1 to 3 carbon atoms, or a vinyl group, and R2 and R3 may be different.

In the present invention, in order to further impart the mechanical strength and the heat resistance to the microcapsule and prevent the leakage of the latent heat storage substance, a compound having two or more vinyl groups (a crosslinking agent having a plurality of vinyl groups) is added and a polymerization reaction is performed. The compound having two or more vinyl groups is not limited, and for example, a compound known as an organic peroxide crosslinking agent in a rubber processing field can be used.

Specifically, the compound is a polyfunctional acrylate monomer having a plurality of vinyl groups. The monomer is an ester-based compound obtained by a reaction of polyhydric alcohol including diol such as ethylene glycol, triol such as glycerol, and pentaerythritol with acrylic acid or methacrylic acid. For example, ethylene glycol dimethacrylate (EGDMA), diethylene glycol dimethacrylate (DEGDMA), and triethylene glycol dimethacrylate (TEGDMA) are preferred.

Two or more types of the ester-based compounds may be used.

In particular, from the viewpoint of reactivity with the acrylonitrile-based monomer and the styrenic monomer, a methacrylate monomer having a plurality of vinyl groups represented by the following formula (3) and a methacrylate monomer having a plurality of vinyl groups represented by the following formula (4), for example, dimethylolpropane dimethacrylate (DMPDMA), and trimethylolpropane trimethacrylate (TMPT) are preferred.

The reason that the polyfunctional acrylate monomer is preferably used is not clear, but the inventors have considered that this is because the e value of a double bond involved in a crosslinking reaction in the compound is usually negative similar to the vinyl monomer having an electron withdrawing group that constitutes the shell material, and the compound is homogeneously disposed in the vinyl monomer having an electron donating group that constitutes the shell material.

[Chemical Formula 3]

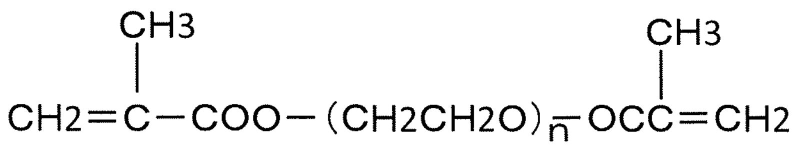

(3)

[Chemical Formula 4]

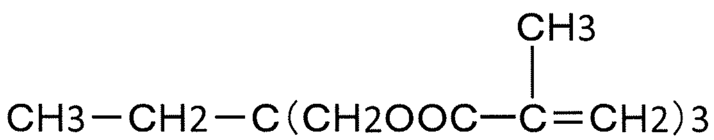

(4)

(A) An acrylonitrile-based monomer and (B) a styrenic monomer correspond to the vinyl monomer having an electron withdrawing group and the vinyl monomer having an electron donating group, respectively. The electron withdrawing group and the electron donating group attract each other to form a charge transfer complex, and alternating copolymerization may be caused. Therefore, in the copolymer constituting the shell according to the present invention, a probability of localizing a non-polar group and a polar group is small. Accordingly, the hydrophobicity and the hydrophilicity of chemical structure of the shell material are homogenized. From the viewpoint of the shape of a microcapsule, the microcapsule may have a spherical, pseudospherical, or flat shape. From the viewpoint of penetration or leakage of the core material, local permeation or leakage thereof may be suppressed.

Specifically, the e value is shown for a relationship between both. For example, from acrylonitrile (e value = 1.20), methacrylonitrile (e value = 1.00), α-methylstyrene (e value = -1.27), and styrene (e value = -0.80) (including estimates based on sources: Takayuki Otsu, "Kobunshigosei no kagaku, " and "Kisokobunshikagaku" edited by The Society of Polymer Science, Japan, and references thereof), a difference between acrylonitrile and styrene is 2.00, and a difference between methacrylonitrile and styrene is 1.80. These are preferred since the charge transfer complex may be easily formed.

The shell material of the microcapsule heat storage material according to the present invention is a crosslinkable copolymer in an amount of 100% by mass including (A) the acrylonitrile-based monomer, (B) the styrenic monomer, and (C) a (meth)acrylate monomer having a plurality of vinyl groups, and the followings are satisfied,
the amount of (A) % by mass ≥ 8,
the amount of (A) % by mass ≥ the amount of (B) % by mass, and
the amount of (C) % by mass ≥ 25.
As a result, the amount of a volatile organic compound (VOC: volatile substance under a condition of 100°C and 2 hours) measured by a certain measurement method decreases to 7. 0 mg/g or less. According to a certain combination thereof, a microcapsule heat storage material having a volatile organic compound in an amount of 5.0 mg/g or less can be obtained. When the microcapsule heat storage material is used for a house construction material, vaporization of organic compounds is low, and the house construction material has extremely high safety. The reason for this is not clear, but the inventors have considered that this is because an acrylonitrile-based monomer having a polarity that is largely different (high hydrophilicity) is contained in an amount of 8% by mass or more and a (meth) acrylate monomer having a plurality of vinyl groups that is involved in the crosslinking reaction is contained in an amount of 25% by mass or more

from the viewpoint of prevention of leakage of n-paraffin as the core material. In addition, the inventors have considered that since the acrylic monomer is contained in an amount of 8% by mass or more, the hydrophilicity of a shell surface layer that is in contact with an aqueous phase increases, and a smooth surface is formed from the viewpoint of microscopic surface configuration.

When the amount of (A) is set to be 25% by mass or more, the loss on heating may be 3.0% or less. When the microcapsule heat storage material is used for a house construction material, the heat storage material and the like only slightly leak, and the house construction material has quite high safety. The reason for this is not clear, but the inventors have considered that this is because the acrylonitrile-based monomer having a polarity that is largely different is contained in an amount of 25% by mass or more from the viewpoint of prevention of leakage of n-paraffin as the core material.

When the shell material of the microcapsule heat storage material according to the present invention is a crosslinkable copolymer in an amount of 100% by mass including the (A), (B), and (C) components, i.e., 5 to 45% by mass of (A) the acrylonitrile-based monomer, 20 to 80% by mass of (B) the styrenic monomer, and 10 to 65% by mass of (C) the (meth) acrylate monomer having a plurality of vinyl groups, the microcapsule heat storage material having an endothermic peak on a TG-DTA temperature-increasing characteristic curve during a heating process from 200 to 500°C can be obtained.

An overview of composition of a region in the microcapsule according to the present invention that has the shell comprising (A) the acrylonitrile-based monomer, (B) the styrenic monomer, and (C) the polyfunctional (meth)acrylate monomer having a plurality of vinyl groups is illustrated by a three-component composition diagram, and is a shaded region in FIG. 1. In FIG. 1, white numbers on black represent Example numbers described below, and circled numbers represent Comparative Example numbers described below. The reason that excellent characteristics are obtained in the region is not clear, but the inventors have assumed that this is due to synergic actions of an endothermic mechanism of acrylonitrile-based (homo)polymer during thermal decomposition, a structure of alternating copolymer formed from the acrylonitrile-based monomer and the styrenic monomer, interactions such as a crosslink density of the (meth)acrylate monomer having a plurality of vinyl groups, and the respective monomers.

As described above, the endothermic behavior of the microcapsule according to the present invention fundamentally depends on the composition of the vinyl monomers constituting the shell. Therefore, in order to obtain the effects of the present invention in terms of the ratio by mass of the n-paraffin-based heat storage material as the core material and the vinyl monomers as the shell material (the total amount of both the materials is 100% by mass), the amount of the shell material is preferably 20% by mass to 80% by mass (the amount of the core material is 80% by mass to 20% by mass), the amount of the shell material is more preferably 40% by mass to 60% by mass (the amount of the core material is 60% by mass to 40% by mass), and the amount of the shell material is particularly preferably 60% by mass to 80% by mass (the amount of the core material is 40% by mass to 20% by mass). When the amount of the shell material is less than 20% by mass and the amount of the core material exceeds 80% by mass, the microcapsule hardly exhibits endothermic behavior. When the amount of the core material is less than 20% by mass and the amount of the shell material exceeds 80% by mass, the function of the heat storage material may be hardly exerted. (See FIG. 1.)

In the crosslinkable copolymer used in the shell material of the present invention, an exothermic peak that is caused by melting of the polymer and an endothermic peak that may be caused by thermal decomposition of the acrylonitrile-based (homo)polymer between 200°C to 500°C are observed in TG-DTA measurement, and the sum of the endothermic peak is larger than the sum of the exothermic peak. The absolute value thereof varies depending on the composition, and is about 1 to 8 KJ/kg.

A polymerization initiator to be subjected to the polymerization reaction according to the present invention is not particularly limited. As a radical polymerization initiator to radically promote polymerization, a general peroxy compound or a general azo compound can be used.

Preferred examples of the radical polymerization initiator may include tert-butyl peroxyneodecanoate, tert-amyl peroxypivalate, dilauroyl peroxide, tert-amyl peroxy-2-ethylhexanoate, 2,2'-azobis(2,4-dimethylvaleronitrile), 2,2'-azobis(2-methylbutyronitrile), dibenzoyl peroxide, tert-butyl-per-2-ethylhexanoate, di-tert-butyl peroxide, tert-butyl hydroperoxide, 2,5-dimethyl-2,5-di(tert-butyl peroxy)hexane, and cumene hydroperoxide.

More preferred examples of the radical polymerization initiator may include di-(3,5,5,-trimethylhexanoyl) peroxide, 4,4'-azobisisobutylonitrile, tert-butyl peroxypivalate, dimethyl-2,2-azobisisobutyrate, and 1,1,3,3-tetramethyl butyl peroxy-2-ethylhexanoate. These initiators have a half-life of 10 hours in a temperature range of 30 to 100°C.

A chain transfer agent to be subjected to the polymerization reaction according to the present invention is not particularly limited. Preferred examples thereof may include (1) mercaptans including a mercaptan (for example, octylmercaptan, n- or tert-dodecylmercaptan), thiosalicylic acid, mercaptoacetic acid, and mercaptoethanol, (2) halogenated compounds, and (3) $\alpha$-methylstyrene dimer. In particular, mercaptans are further preferred.

In the present invention, an O/W emulsion containing the latent heat storage substance having no vinyl group and the vinyl monomers is used as a raw material to perform the polymerization reaction. The O/W emulsion is an emulsion having an oil phase (the organic compound having no vinyl group and the vinyl monomers) as a dispersed phase and an aqueous phase containing a dispersant as a continuous phase. In the present invention, this O/W emulsion

is used as a raw material to perform the polymerization reaction. An initiator necessary for the polymerization reaction, or the like, may coexist during formation of the O/W emulsion, or be added before initiation of the polymerization reaction after the formation of the O/W emulsion.

A dispersion stabilizer in the O/W dispersion to be subjected to the polymerization reaction according to the present invention is not particularly limited. Preferred examples thereof may include partially saponified polyvinyl acetate, cellulose derivatives, and polyvinylpyrrolidone. In particular, partially saponified polyvinyl acetate is further preferred.

In the present invention, a known suspension polymerization device can be used, but it is preferable that the O/W dispersion is emulsified by a step of continuously and successively passing the O/W dispersion through a plurality of net bodies that are provided along a flow path and disposed at certain intervals before the polymerization reaction. When the O/W dispersion is used in the polymerization reaction, a microcapsule having a well-formed shape, high homogeneity and a core-shell structure can be obtained. Further, the function of the microcapsule heat storage material according to the present invention can be efficiently and uniformly achieved.

For example, the O/W dispersion having a predetermined composition is passed in the flow path at a linear rate of 0.1 to 50 cm/sec. The net bodies are disposed at a plurality of positions in the flow path at certain intervals. A supplied emulsification raw material is successively passed through the net bodies. At this time, decreased size of the dispersed phase in the O/W dispersion proceeds, and is stabilized and homogenized, and the CV value of droplets of the dispersed phase becomes 50% or less. A value approximate to this value is retained as a CV value of a microcapsule after the polymerization reaction. The inventors have considered that a CV value of 30% or less indicates uniform expression of preferred function of the microcapsule on the basis of the results in Examples. However, it is difficult to obtain this value by general batch emulsification.

The exerted function of the microcapsule according to the present invention largely depends on the composition of the shell material and/or the CV value. When the average particle diameter falls within a range of 5 $\mu$m to 500 $\mu$m, the effects of the present invention can be sufficiently achieved.

The mechanism of emulsification by this method, the functional effect of the net bodies, and the like, are not clear, but are considered as follows. Once a fluid reaches the net body, the fluid is divided by many meshes of the net body into droplets, the produced droplets are stabilized before they reach the next net body, and as a result, the particle diameter of droplets of the dispersed phase is made uniform. The droplets of the dispersed phase become a core-shell structure, in which the latent heat storage substance and the vinyl monomer are disposed in a core and a shell, respectively.

Through these processes, micelle in which hydrophilic groups are on the surface of a sphere may be formed and arranged, and as a result, the vinyl monomer may act as a surfactant-like function. It is considered that the combination of the vinyl monomers according to the present invention (combination of hydrophobicity and hydrophilicity) may contribute to the expression of this function.

The distance between the net bodies depends on the fluid flow rate in the flow path, the fluid viscosity, or the like, and specifically, the distance is usually, preferably 5 mm to 200 mm, and more preferably 10 mm to 100 mm. The distance between the net bodies is ensured by inserting spacer c in the cylindrical passage. Herein, when the flow rate is higher, it is preferable that a longer distance is used. When the fluid viscosity is higher, it is preferable that a shorter distance be used. Further, it is important that the net bodies are disposed at a plurality of positions along the flow path. It is preferable that the number of positions be 30 to 200. The aperture of the net bodies is the number of mesh in accordance with ASTM Standard, and is preferably 35 to 4,000, and more preferably 150 meshes to 3,000 meshes.

FIG. 2 shows a cross-section view of the emulsification device, FIG. 3 shows a perspective view of a spacer, and FIG. 4 shows a cross-sectional view of the whole emulsification device.

The inventors have also found that, when the CV value of the emulsion produced by performing this process is 20% or less, a supercooling phenomenon can be quite effectively suppressed. This is considered because a process of transferring heat to n-paraffin as the heat storage material in the microcapsule is uniformly performed.

In the present invention, a microcapsule heat storage material obtained by the suspension polymerization device represented above can be separated by a solid-liquid separation method such as a known filtration method and a centrifugal separation method, thereby being used. However, when the microcapsule heat storage material is spray-dried using a spray drier, in addition to the effect of the heat storage material of the present invention, the volatile organic compound (VOC) can be decreased, and the secondary aggregation of microcapsule particles can be controlled. For example, the microcapsule heat storage material can be easily used by homogeneous dispersion in a house construction material.

The spray drier is a widely used spray drying device. For example, the principle and specification of the device are publicly released and described in the homepage of Ohkawara Kakohki Co., Ltd. In the present invention, a suspension containing the microcapsule heat storage material after the suspension polymerization or a suspension obtained by suspending the separated microcapsule heat storage material in an aqueous solvent is continuously brought into contact with hot air (sprayed) little by little using a nozzle (nozzle spraying process) or a high-speed rotary disk (centrifugation spraying process) provided in the main body of a spray drier, so as to be instantaneously and continuously dried.

Therefore, the thermal history of n-paraffin as the core material due to heating and drying after solid-liquid separation is small (as compared with bulk batch processing), and the large contact surface area with a heating medium is ensured. Accordingly, water and various additives can be removed (an agglomerate can be crushed), and n-paraffin adhered to the surface of the shell material can be removed (i.e. the volatile organic compound (VOC) can be decreased). A state of the secondary aggregation can also be arbitrarily suppressed and controlled by adjustment of a nozzle diameter and a high-speed rotary disk channel (the handling properties during incorporation into a housing construction material such as a plaster board are favorable).

According to the present invention, the microcapsule heat storage material produced can be used as an excellent heat storage material for a construction material such as a plaster board, a fiber reinforced plaster panel, a cement-based wood chipboard, a woody cement board, a light-weight foam concrete, a soil wall board, a calcium silicate board, a soft fiber board, a woody heat insulating material, a board of construction material, an interior material, a plastered wall, a heat insulating material, a heat shielding material, and wallpaper.

Examples

Hereinafter, the present invention will be described further specifically with reference to Examples and Comparative Examples. The present invention is not limited to the following Examples.

<Main components of microcapsule heat storage material>

As various chemicals used in Examples, commercially available products were used as they were.

<n-paraffin-based heat storage material>

"TS-8 (trade name) " (n-octadecane) or "TS-6 (trade name) " (n-hexadecane) available from JX Nippon Oil & Energy Corporation was used.

<(A) component: acrylonitrile-based monomer>

Methacrylonitrile (available from Wako Pure Chemical Industries, Ltd., guaranteed reagent) was used.

<(B) component: styrenic monomer>

Styrene (available from KISHIDA CHEMICAL Co., Ltd., guaranteed reagent) was used.

<(C) component: polyfunctional (meth)acrylate monomer having vinyl groups>

Ethyleneglycol dimethacrylate (EGDMA) (available from Tokyo Chemical Industry Co., Ltd.) or trimethylolpropane trimethacrylate (TMPT) (available from Tokyo Chemical Industry Co., Ltd.) was used.

<Preparation and treatment I of O/W emulsion before polymerization reaction>

30 units including wire mesh b made of main wire mesh with 3,000 meshes and a spacer c with a length (1) of 10 mm and an internal diameter (d2) of 15 mm were inserted into a cylindrical casing a with an internal diameter of 20 mm and a length of about 500 mm to construct an emulsification device. (Note that in FIG. 4, the number of net bodies is set to 10.)

A dispersion medium obtained by mixing an aqueous solution of dispersant (PVA217EE available from KURARAY CO., LTD., 2 parts by weight) in an oil phase mixture of paraffin TS-8 (chemical name: n-octadecane) available from JX Nippon Oil & Energy Corporation as a latent heat storage substance, predetermined vinyl monomers (types and compositions are shown in Tables 1 to 4), 1.4 parts by weight of PEROCTA O (POO, 1,1,3,3,-tetramethylbutyl peroxy-2-ethylhexanoate) available from NOF Corporation as an initiator, and 3.0 parts by weight of THIOKALCOL 20 (chemical name: n-dodecyl mercaptan, also referred to as "DM") available from Kao Corporation as a chain-transfer agent was used as an O/W dispersion. The oil phase mixture and the aqueous dispersant solution were introduced into the emulsification device at flow rates of 30 g/min and 60 g/min, respectively, with respective separate plunger pumps, to cause emulsification. As a result, an O/W emulsion was obtained. The O/W emulsion was diluted with distilled water, and the O/W emulsion having an oil phase concentration of 20% by weight was used as a raw material for polymerization.

<Preparation and treatment II of O/W emulsion before polymerization reaction>

Instead of the treatment I, a homogenizer was used in dispersion at 3, 000 rpm for 5 minutes to prepare an O/W emulsion, which was used as a raw material for polymerization.

<Carrying out of polymerization reaction>

60 g of the above-described O/W emulsion and 40 g of distilled water were placed in a container (polymerization vessel) equipped with a stirrer, a pressure gauge, and a thermometer. The pressure in a polymerization container was decreased to remove oxygen in the container, and the pressure in the polymerization vessel was returned to normal pressure using nitrogen and increased to 0.3 MPa using nitrogen. The temperature in the polymerization vessel was increased to 110°C with the stirrer rotating, to initiate polymerization. The polymerization was terminated for 2 hours, and the temperature in the polymerization vessel was cooled down to room temperature. As a result, a slurry containing a heat storage microcapsule with a microcapsule concentration of about 20% by weight was obtained. A polymerization liquid was filtered through a filter paper, to isolate the heat storage microcapsule. The heat storage microcapsule was dried at 80°C under an atmospheric pressure, to obtain a powder of the microcapsule.

<Measurement of characteristics of microcapsule heat storage material>

(1) The particle diameter and the CV value were measured by the following methods.
The volume average diameter (hereinafter referred to as "volume average particle diameter") of slurry obtained as described above and the droplet diameter distribution (equal to particle diameter distribution of microcapsule in the slurry) were measured by a Coulter counter (Multisizer 4, manufactured by Beckman Coulter, Inc.). Herein, the number of measured particles was 100,000. As a result, the volume average particle diameter of droplets was 10 μm, and the CV value was 25%. The CV value used as an indication of droplet diameter distribution was calculated by the following equation (1).

CV value = standard deviation of droplet diameter distribution / volume average particle diameter × 100 Equation (1)

The volume average particle diameter and the CV value were measured by the same methods also in the following Examples and Comparative Examples.
(2) The VOC value was measured by the following method.
0.1 g of sample was weighed in a petri dish, and the dish was placed in a micro chamber. A radiation test was carried out under a condition of standing at 100°C for 2 hours, followed by at 25°C for 22 hours. A generated gas was collected by a Tenax TA tube. The diffused gas collecting tube (Tenax TA tube) and the micro chamber were subjected to solvent extraction with hexane, and the generated gas was determined by a GC/MS.
(3) The loss on heating was measured by the following process.
1 to 2 g of dried microcapsule was weighed in an aluminum cup, and retained at 80°C under vacuum for 5 hours. The loss on heating was measured.
(4) The endothermic characteristics of the microcapsule were measured by the following process.

About 10 mg of each microcapsule heat storage material was weighed in an aluminum pan, and analyzed by a thermogravimetry/differential thermal simultaneous measuring device DTG-60 manufactured by Shimadzu Corporation. Measurement conditions were an increase in temperature from room temperature to 600°C at a temperature increasing rate of 50°C/min and retention at 600°C for 10 minutes.
In a characteristic curve within a range lower than 500°C that corresponds to a temperature-increasing range during combustion, the following two points were analyzed.

1) The peak temperatures and amount of heat of appeared endothermic peak and exothermic peak were read.
2) Heat balance

The sum of the amount of area of the exothermic peak and the amount of area of the endothermic peak was considered as the heat balance.

[Production I of microcapsule heat storage material]

[Examples 1 to 6 and Comparative Examples 1 and 3]

A mixed liquid obtained using each composition shown in Table 1 was subjected to the treatment I to obtain an O/W emulsion, and a polymerization reaction was performed. In Table, MAN represents methacrylonitrile, ST represents styrene, and EGDMA represents ethylene glycol dimethacrylate.

[Table 1]

| | SHELL | | | | | | CORE | | Peak Appeared At 200°C To 500°C | | |
|---|---|---|---|---|---|---|---|---|---|---|---|
| | Vinyl Monomer Having Electron Withdrawing Properties: Acrylonitrile-Based Monomer (A) | | Vinyl Monomer Having Electron DonatingProperties; Styrenic Monomer (B) | | Monomer Having A Plurality Of Vinyl Groups (C) | | n-Paraffin-Based Heat Storage Material | Shell: Core % By Mass: % By Mass (Reference For Supplied Raw Material) | Peak Temperature (°C) Pattern (Endothermic Or Exothermic) Amount Of Heat (kJ/kg) | | Amount Of HeatOfTotal Heat Balance At Peak (kJ/kg) |
| | Chemical Name | % By Mass | Chemical Name | % By Mass | Chemical Name | % By Mass | Trade Name (Chemical Name) | | | | |
| EXAMPLE 1 | MAN | 37.5 | ST | 37.5 | EGDMA | 25 | TS8 (n-C18) | 60: 40 | 288 Endotherm -1.7 | 474 Endotherm -3.7 | -5.4 |
| EXAMPLE 2 | MAN | 37.5 | ST | 37.5 | EGDMA | 25 | TS8 (n-C18) | 60 : 40 | 242 Endotherm -1.5 | 474 Endotherm -4.2 | -5.7 |
| EXAMPLE 3 | MAN | 35 | ST | 50 | EGDMA | 15 | TS8 (n-C18) | 60: 40 | 239 Exotherm +2.5 | 500 Endotherm -3.70 | -1.2 |
| EXAMPLE 4 | MAN | 10 | ST | 75 | EGDMA | 15 | TS8 (n-C18) | 60: 40 | 236 Exotherm +3.1 | 494 Endotherm -4.4 | -1.3 |
| EXAMPLE 5 | MAN | 8 | ST | 31 | EGDMA | 61 | TS8 (n-C18) | 60: 40 | 251 Exotherm +2.4 | 359 Endotherm -1.5 | +0.9 |
| EXAMPLE 6 | MAN | 25 | ST | 25 | EGDMA | 50 | TS8 (n-C18) | 60:40 | 260 Exotherm +2.7 | 374 Endotherm -0.80 | +1.9 |
| COMPARATIVE EXAMPLE 1 | MAN | 50 | ST | 17 | EGDMA | 33 | TS8 (n-C18) | 60: 40 | No Endothermic Peak | | |
| COMPARATIVE EXAMPLE 2 | MAN | 31 | ST | 8 | EGDMA | 61 | TS8 (n-C18) | 60: 40 | No Endothermic Peak | | |

(continued)

| | SHELL | | | | | | CORE | Shell: Core % By Mass: % By Mass (Reference For Supplied Raw Material) | Peak Appeared At 200°C To 500°C | Amount Of Heat Of Total Heat Balance At Peak (kJ/kg) |
|---|---|---|---|---|---|---|---|---|---|---|
| | Vinyl Monomer Having Electron Withdrawing Properties: Acrylonitrile-Based Monomer (A) | | Vinyl Monomer Having Electron Donating Properties; Styrenic Monomer (B) | | Monomer Having A Plurality Of Vinyl Groups (C) | | n-Paraffin-Based Heat Storage Material | | Peak Temperature (°C) Pattern (Endothermic Or Exothermic) Amount Of Heat (kJ/kg) | |
| | Chemical Name | % By Mass | Chemical Name | % By Mass | Chemical Name | % By Mass | Trade Name (Chemical Name) | | | |
| COMPARATIVE EXAMPLE 3 | MAN | 9 | ST | 9 | EGDMA | 82 | TS8 (n-C18) | 60:40 | No Endothermic Peak | |

<Consideration>

As seen from the results in Table 1, when the composition of cross-linking copolymer of vinyl monomers constituting a shell falls within the range of the present invention, an endothermic peak is generated on a TG-DTA characteristic curve during a heating process from 200 to 500°C.

[Production II of microcapsule heat storage material]

[Examples 10 to 16 and Comparative Examples 10 to 11]

A mixed liquid obtained using each composition shown in Table 2 was subjected to the treatment I in Examples 10 to 15, and subjected to the treatment II in Example 16, to obtain an O/W emulsion, and a polymerization reaction was performed. In Table, AN represents acrylonitrile, MAN represents methacrylonitrile, ST represents styrene, EGDMA represents ethylene glycol dimethacrylate, and TMPT represents trimethylolpropane trimethacrylate.

[Table 2]

| | SHELL | | | | | | CORE | | |
|---|---|---|---|---|---|---|---|---|---|
| | Vinyl Monomer Having Electron Withdrawing Properties: Acrylonitrile-Based Monomer (A) | | Vinyl Monomer Having Electron Donating Properties; Styrenic Monomer (B) | | Monomer Having A Plurality Of Vinyl Groups (C) | | n-Paraffin-Based Heat Storage Material | Shell : Core % By Mass: % By Mass (Reference For Supplied Raw Material) | VOC (100°C × 2 Hr) (mg/g) |
| | Chemical Name | % By Mass | Chemical Name | % By Mass | Chemical Name | % By Mass | Trade Name (Chemical Name) | | |
| EXAMPLE 10 | AN | 25 | ST | 25 | EGDMA | 50 | TS8 (n-C18) | 60:40 | 1.6 |
| EXAMPLE 11 | AN | 37.5 | ST | 37.5 | EGDMA | 25 | TS8 (n-C18) | 60: 40 | 0.8 |
| EXAMPLE 12 | MAN | 31 | ST | 8 | EGDMA | 61 | TS8 (n-C18) | 60:40 | 2.1 |
| EXAMPLE 13 | MAN | 37.5 | ST | 37.5 | EGDMA | 25 | TS8 (n-C18) | 60:40 | 1.9 |
| EXAMPLE 14 | MAN | 8 | ST | 8 | EGDMA | 84 | TS8 (n-C18) | 60:40 | 0.7 |
| EXAMPLE 15 | MAN | 31 | ST | 8 | TMPT | 61 | TS8 (n-C18) | 60: 40 | 2.5 |
| EXAMPLE 16 | MAN | 37.5 | ST | 37.5 | EGDMA | 25 | TS8 (n-C18) | 60:40 | 2.7 |
| COMPARATIVE EXAMPLE 10 | MAN | 17 | ST | 50 | EGDMA | 33 | TS8(n-C18) | 60: 40 | 10.2 |
| COMPARATIVE EXAMPLE 11 | MAN | 17 | ST | 50 | TMPT | 33 | TS8 (n-C18) | 60:40 | 11.5 |

<Consideration>

As seen from the results in Table 2, when the composition of cross-linking copolymer of vinyl monomers constituting a shell falls within the range of the present invention, a microcapsule heat storage material having low VOC value is obtained. The average particle diameter of the microcapsule heat storage materials fell within a range of 5 to 20 μm. In Example 16, the CV value was 35%.

A suspended aqueous solution of microcapsule heat storage material (about 18% by mass of microcell heat storage material particle : 82% by mass of aqueous solvent) obtained in <Measurement of endothermic characteristics of microcapsule> described above using the composition shown in Example 1 of Table 1 was filtered, and dispersed in water, and the dispersion was spray-dried using a spray drier. The presence of particles in a crushed state without secondary aggregation was confirmed by visual observation and observation with a scanning electron microscope (SEM). An outline of production line including a treatment with the spray drier is shown in FIG. 5.

When the outlet temperature of a hopper shown in FIG. 5 was set to 90°C (the temperature is shown in FIG. 5 as an example), the amount of volatile organic chemical substance (VOC) measured in accordance with the process of measuring VOC in (2) of Example 1 decreased to 0.5 mg/g relative to 1.9 mg/g that is the amount of VOC in the microcapsule heat storage material in Example 3, as shown in Table 2. Therefore, enhancement in safety during use as a heat storage material for a house construction material and the like was confirmed. Even when the temperature was increased to 135°C during spray-drying of the microcapsule heat storage material according to the present invention, the VOC amount can be effectively decreased without any problems.

[Production III of microcapsule heat storage material]

[Examples 20 to 29 and Comparative Example 20]

A mixed liquid obtained using each composition shown in Table 3 was subjected to the treatment I to obtain an O/W emulsion, and a polymerization reaction was performed. In Table 3, MMA represents methyl methacrylate, AN represents acrylonitrile, MAN represents methacrylonitrile, ST represents styrene, EGDMA represents ethylene glycol dimethacrylate, DVB represents divinyl benzene, and TMPT represents trimethylolpropane trimethacrylate. In Comparative Example 20, the treatment II was performed, followed by a polymerization reaction.

[Table 3]

| | SHELL | | | | | | CORE | Shell : Core % By Mass: % By Mass (Reference For Supplied Raw Material) | VOC (100°C × 2 Hr) (mg/g) | Loss on Heating (%) | CV value (%) |
|---|---|---|---|---|---|---|---|---|---|---|---|
| | Vinyl Monomer Having Electron Withdrawing Properties: Acrylonitrile-Based Monomer (A) | | Vinyl Monomer Having Electron Donating Properties; Styrenic Monomer (B) | | Monomer Having A Plurality Of Vinyl Groups (C) | | n-Paraffin-Based Heat Storage Material | | | | |
| | Chemical Name | % By Mass | Chemical Name | % By Mass | Chemical Name | % By Mass | Trade Name (Chemical Name) | | | | |
| EXAMPLE 20 | MMA | 50 | ST | 33 | DVB | 17 | TS8 (n-C18) | 60 : 40 | 5.0 | 7.1 | 25 |
| EXAMPLE 21 | AN | 25 | ST | 50 | EGDMA | 25 | TS8 (n-C18) | 60:40 | 2.5 | 0.1 | 24 |
| EXAMPLE 22 | AN | 25 | ST | 25 | EGDMA | 50 | TS8 (n-C18) | 60:40 | 1.6 | 0.0 | 26 |
| EXAMPLE 23 | AN | 8 | ST | 30 | EGDMA | 62 | TS8 (n-C18) | 60:40 | 6.1 | 4.4 | 28 |
| EXAMPLE 24 | AN | 17 | ST | 50 | EGDMA | 33 | TS8 (n-C18) | 60: 40 | 3.3 | 0.8 | 27 |
| EXAMPLE 25 | AN | 37.5 | ST | 37.5 | EGDMA | 25 | TS8 (n-C18) | 60 : 40 | 0.8 | 0.2 | 24 |
| EXAMPLE 26 | AN | 25 | ST | 25 | TMPT | 50 | TS8 (n-C18) | 60:40 | 1.9 | 0.3 | 25 |
| EXAMPLE 27 | MAN | 25 | ST | 25 | EGDMA | 50 | TS8 (n-C18) | 60: 40 | 5.5 | 2.3 | 25 |
| EXAMPLE 28 | MAN | 50 | ST | 17 | EGDMA | 33 | TS8 (n-C18) | 60 : 40 | 4.3 | 1.4 | 26 |
| EXAMPLE 29 | MAN | 30 | ST | 8 | EGDMA | 62 | TS8 (n-C18) | 60:40 | 2.1 | 1.0 | 25 |
| COMPARATIVE EXAMPLE 20 | MAN | - | ST | 67 | EGDMA | 33 | TS8 (n-C18) | 60: 40 | 15.1 | 10.4 | 42 |

<Consideration>

As seen from the results in Table 3, when the composition of cross-linking copolymer of vinyl monomers constituting a shell fell within the range of the present invention and the treatment I according to the present invention was performed, the CV value was 30% or less, and therefore, a microcapsule heat storage material having excellent characteristics in terms of both VOC characteristics and loss on heating is obtained. The average particle diameters of the microcapsule heat storage materials each fell within a range of 5 to 20 μm.

[Production IV of microcapsule heat storage material]

[Examples 30 and 31 and Comparative Example 20]

A mixed liquid obtained using each composition shown in Table 4 was subjected to the treatment I to obtain an O/W emulsion, and a polymerization reaction was performed. ST represents styrene, EGDMA represents ethylene glycol dimethacrylate, and TMPT represents trimethylolpropane trimethacrylate. In Comparative Example 20, the treatment II was performed instead of the treatment I, followed by a polymerization reaction.

[Table 4]

| | SHELL | | | | | | CORE | Shell : Core % By Mass: % By Mass (Reference For Supplied Raw Material) | VOC (100°C × 2 Hr) (mg/g) | Loss on Heating (%) | CV value (%) |
|---|---|---|---|---|---|---|---|---|---|---|---|
| | Vinyl Monomer Having Electron Withdrawing Properties: Acrylonitrile-Based Monomer (A) | | Vinyl Monomer Having Electron Donating Properties; Styrenic Monomer (B) | | Monomer Having A Plurality Of Vinyl Groups (C) | | n-Paraffin-Based Heat Storage Material | | | | |
| | Chemical Name | % By Mass | Chemical Name | % By Mass | Chemical Name | % By Mass | Trade Name (Chemical Name) | | | | |
| EXAMPLE 30 | MAN | - | ST | 67 | EGDMA | 33 | TS8 (n-C18) | 60 : 40 | 6.4 | 6.0 | 26 |
| EXAMPLE 31 | MAN | - | ST | 67 | TMPT | 33 | TS8 (n-C18) | 60 : 40 | 5.7 | 9.3 | 28 |
| COMPARATIVE EXAMPLE 30 | MAN | - | ST | 67 | EGDMA | 33 | TS8 (n-C18) | 60 : 40 | 15.1 | 10.4 | 42 |

<Consideration>

As seen from the results in Table 4, when the treatment I according to the present invention was performed, the CV value was 30% or less, and a microcapsule heat storage material having excellent characteristics in terms of VOC characteristics was obtained. The average particle diameters of the microcapsule heat storage materials each fell within a range of 5 to 20 μm.

Industrial Applicability

In a microcapsule heat storage material obtained by the method of the present invention, a core material is a latent heat storage substance, and a shell material is a cross-linked copolymer of components, and the particle diameter distribution is uniform and smaller than a conventional product. Therefore, the heat storage effect of the core material can be stably and efficiently expressed in the microcapsule heat storage material. When a styrene-acrylonitrile or methacrylonitrile copolymer is selected for the shell material, the heat storage substance as the core material only slightly leaks, and durability can be secured.

Further, the microcapsule heat storage material according to the present invention exhibits endothermic behavior during a heating process from 200 to 500°C. Various structural members such as a house construction material that requires heat storage properties and flame retardant properties simultaneously can be produced while the microcapsule heat storage material having n-paraffin as the core material has advantages in a heat storage structural material of the house construction material. Further, a microcapsule heat storage aterial having low VOC value can be produced. The secondary aggregation of microcapsule particles can be suppressed. Therefore, a material having favorable handling properties for application to the construction material can be obtained.

Reference Signs List

- a casing
- b wire mesh (net body)
- c spacer
- 2a stopper

## Claims

1. A microcapsule heat storage material that is obtained by a cross-linking copolymerization reaction of vinyl monomers in an O/W dispersion containing a latent heat storage substance having no vinyl group and a group of at least two or more types of vinyl monomers containing a vinyl monomer having cross-linking ability, and
has a core-shell structure in which
a material constituting a core (hereinafter referred to as a core material) is the latent heat storage substance having no vinyl group and
a material constituting a shell (hereinafter referred to as a shell material) is a cross-linked copolymer including the vinyl monomer group, wherein
the latent heat storage substance having no vinyl group is an n-paraffin-based latent heat storage material, and
the vinyl monomer group contains at least one type of vinyl monomer having an electron withdrawing group and at least one type of vinyl monomer having an electron donating group, which are different from each other.

2. The microcapsule heat storage material according to claim 1, wherein
in the cross-linked copolymer constituting the shell material,
the vinyl monomer having an electron withdrawing group contains any of an acrylonitrile-based monomer and an acrylic monomer (including a polyfunctional acrylate monomer having a plurality of vinyl groups having cross-linking ability), and
the vinyl monomer having an electron donating group contains a styrenic monomer.

3. The microcapsule heat storage material according to claim 1 or 2, wherein:

   the cross-linked copolymer constituting the shell material is a crosslinkable copolymer obtained from (A) an acrylonitrile-based monomer, (B) a styrenic monomer, and (C) a (meth)acrylate monomer having a plurality of

vinyl groups;
an amount of (A) % by mass ≥ 8,
the amount of (A) % by mass ≥ an amount of (B) % by mass, and
an amount of (C) % by mass ≥ 25,
provided that a total amount of the monomers is 100% by mass; and
an amount of a volatile organic compound (VOC: volatile substance under a condition of 100°C and 2 hours) is 7.0 mg/g or less.

**4.** The microcapsule heat storage material according to claim 1 or 2, wherein: the microcapsule heat storage material is obtained by the cross-linking copolymerization reaction of the vinyl monomers in the O/W dispersion containing the latent heat storage substance having no vinyl group and the group of at least two or more types of vinyl monomers containing the vinyl monomer having cross-linking ability, and
has the core-shell structure in which
the core material is the latent heat storage substance having no vinyl group and
the shell material is the cross-linked copolymer including the vinyl monomer group;
the latent heat storage substance having no vinyl group is an n-paraffin-based latent heat storage material;
the cross-linked copolymer constituting the shell material has a composition of

5 to 45% by mass of (A) an acrylonitrile-based monomer,
20 to 80% by mass of (B) a styrene monomer, and
10 to 65% by mass of (C) a polyfunctional (meth) acrylate monomer having a plurality of vinyl groups (provided that a total amount of the (A), (B), and (C) components is 100% by mass); and
a TG-DTA temperature-increasing characteristic curve during a heating process from 200 to 500°C has an endothermic peak.

**5.** The microcapsule heat storage material according to claim 4, wherein on the TG-DTA characteristic curve during the heating process from 200°C to 500°C, a sum of endotherm in a whole endothermic peak is larger than a sum of exotherm in a whole exothermic peak.

**6.** The microcapsule heat storage material according to claim 4 or 5, wherein the amount of the core material is 20% by mass to 80% by mass and the amount of the shell material is 80% by mass to 20% by mass provided that the total amount of the core material and the shell material is 100% by mass.

**7.** The microcapsule heat storage material according to any one of claims 1 to 6, wherein a CV value represented by the following equation (1) that is an indication of particle diameter distribution of the microcapsule heat storage material is 30% or less,

$$\text{CV value} = (\text{standard deviation of droplet diameter distribution} / \text{volume average particle diameter}) \times 100 \quad \text{Equation (1).}$$

**8.** The microcapsule heat storage material according to any one of claims 1 to 6, wherein a CV value represented by the following equation (1) that is an indication of particle diameter distribution of the microcapsule heat storage material is 20% or less,

$$\text{CV value} = (\text{standard deviation of droplet diameter distribution} / \text{volume average particle diameter}) \times 100 \quad \text{Equation (1).}$$

**9.** The microcapsule heat storage material according to any one of claims 1, 2, and 4 to 8, wherein the microcapsule

heat storage material is obtained through a drying step by spray-drying.

**10.** The microcapsule heat storage material according to claim 3, wherein the microcapsule heat storage material is obtained through a drying step by spray-drying.

**11.** The microcapsule heat storage material according to any one of claims 1 to 9, wherein the microcapsule heat storage material is obtained through a step of continuously and successively passing the O/W dispersion through a plurality of net bodies that are provided along a flow path and disposed at certain intervals before the cross-linking copolymerization reaction, resulting in emulsification.

**12.** The microcapsule heat storage material according to claim 3, wherein the microcapsule heat storage material is obtained through a step of emulsifying the O/W dispersion using a homogenizer before the cross-linking copolymerization reaction.

**13.** Use of the microcapsule heat storage material according to any one of claims 1 to 10, for a house construction material.

**14.** A method of producing a microcapsule that is obtained by a cross-linking copolymerization reaction of vinyl monomers in an O/W dispersion containing a latent heat storage substance having no vinyl group and a group of at least two or more types of vinyl monomers containing a vinyl monomer having cross-linking ability, and
has a core-shell structure in which
a core material is the latent heat storage substance having no vinyl group and
a shell material is a cross-linked copolymer including the vinyl monomer group, wherein
the vinyl monomers contain at least one type of vinyl monomer having an electron withdrawing group and at least one type of vinyl monomer having an electron donating group, which are different from each other,
the method comprising a step of continuously and successively passing the O/W dispersion through a plurality of net bodies that are provided along a flow path and disposed at certain intervals before the polymerization reaction, resulting in emulsification.

**15.** The method of producing a microcapsule according to claim 14, wherein the vinyl monomers in the O/W dispersion contain acrylonitrile and/or methacrylonitrile as the vinyl monomer having an electron withdrawing group and styrene as the vinyl monomer having an electron donating group.

**16.** The method of producing a microcapsule according to claim 14 or 15, wherein the core material is a $C_8$ to $C_{40}$ hydrocarbon.

**17.** The method of producing a microcapsule according to any one of claims 14 to 16, wherein the microcapsule has a CV value represented by the following equation (1) of 30% or less,

$$\text{CV value} = (\text{standard deviation of drop diameter distribution} / \text{volume average particle diameter}) \times 100 \quad \text{Equation (1)}.$$

**18.** The method of producing a microcapsule heat storage material according to any one of claims 15 to 17, wherein the microcapsule heat storage material includes a cross-linked vinyl monomer copolymer obtained by suspension polymerization in the O/W dispersion as a shell material and an n-paraffin-based latent heat storage material as a core material, and
a monomer composition in 100% by mass of the cross-linked vinyl monomer copolymer constituting the shell material includes

5 to 45% by mass of (A) an acrylonitrile-based monomer,
20 to 80% by mass of (B) a styrene monomer, and
10 to 65% by mass of (C) a polyfunctional acrylate monomer having a plurality of vinyl groups

(provided that a total amount of the (A), (B), and (C) components is 100% by mass).

**19.** The method of producing a microcapsule heat storage material according to claim 18, wherein the O/W dispersion obtained by the suspension polymerization is spray-dried using a spray drier.

F I G. 1

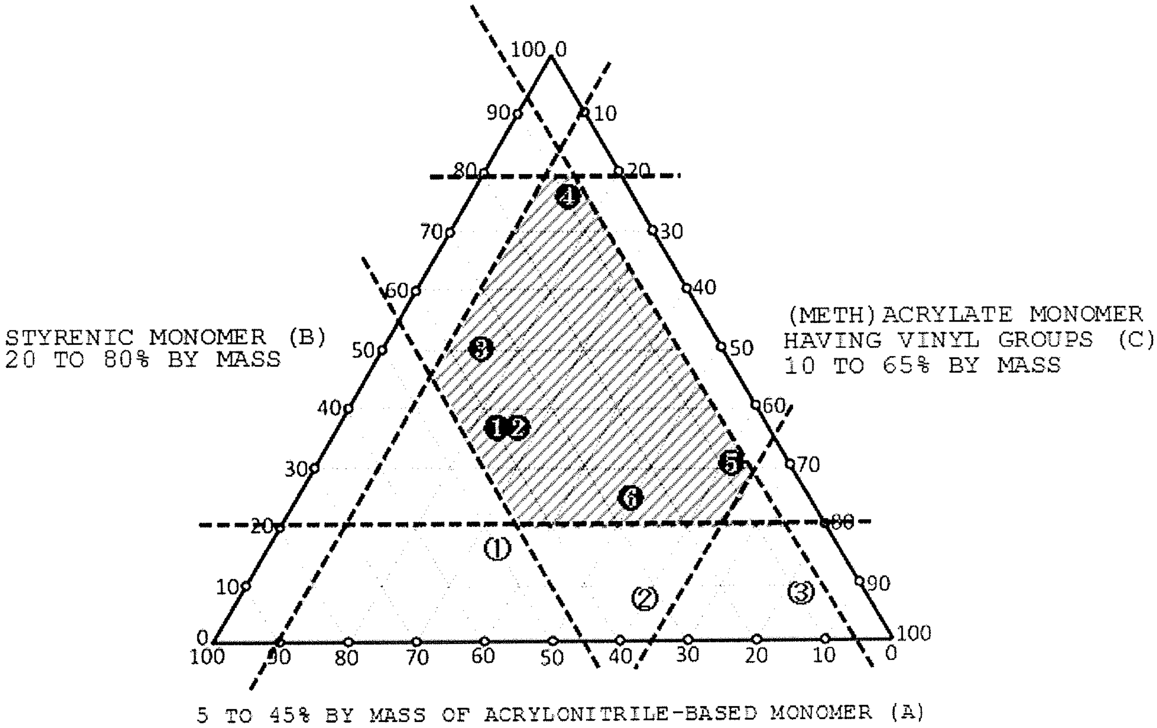
STYRENIC MONOMER (B)
20 TO 80% BY MASS
(METH)ACRYLATE MONOMER
HAVING VINYL GROUPS (C)
10 TO 65% BY MASS
5 TO 45% BY MASS OF ACRYLONITRILE-BASED MONOMER (A)

F I G. 2

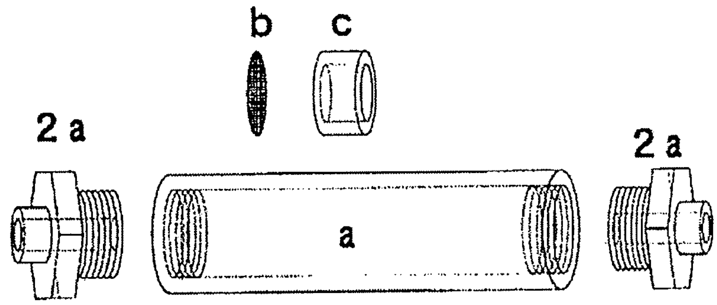
b
c
2 a
a
2 a

F I G. 3

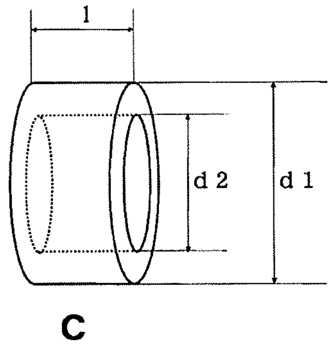


F I G. 4

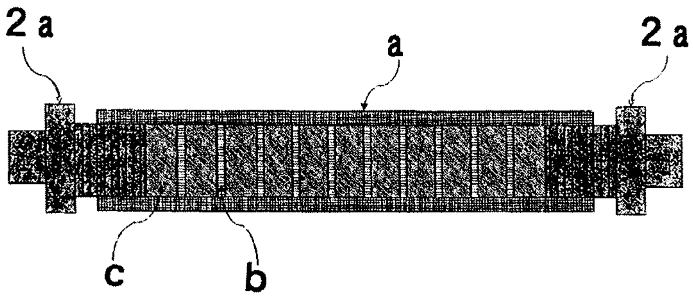

F I G. 5

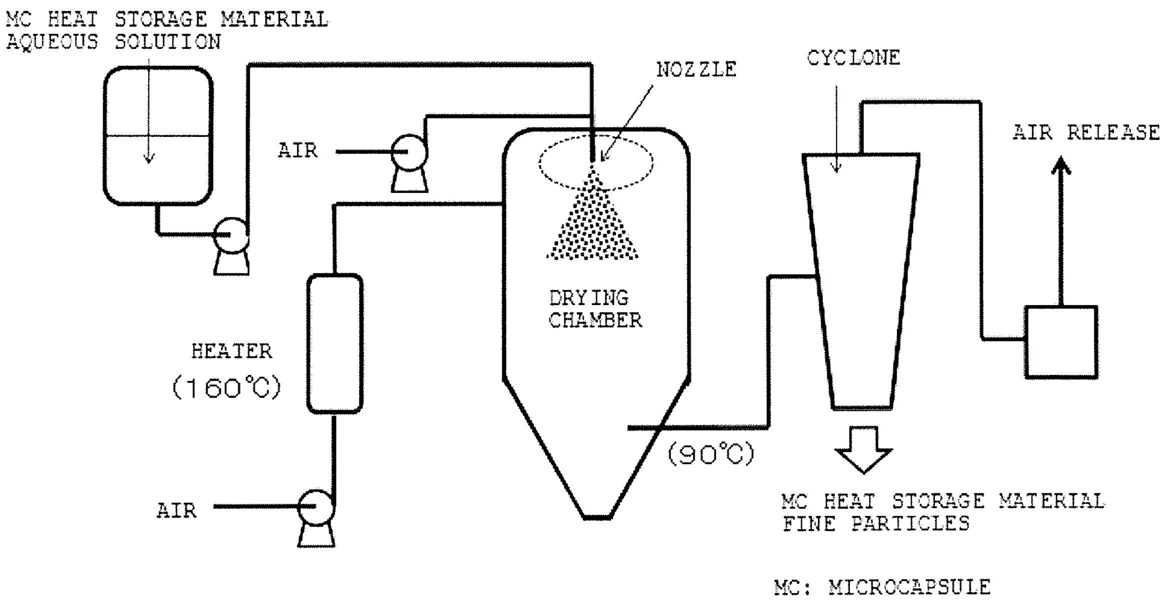
MC HEAT STORAGE MATERIAL
AQUEOUS SOLUTION
NOZZLE
CYCLONE
AIR RELEASE
AIR
DRYING
CHAMBER
HEATER
(160℃)
(90℃)
AIR
MC HEAT STORAGE MATERIAL
FINE PARTICLES
MC: MICROCAPSULE

## INTERNATIONAL SEARCH REPORT

International application No.
PCT/JP2014/050865

A. CLASSIFICATION OF SUBJECT MATTER
*C09K5/06*(2006.01)i, *B01J13/14*(2006.01)i, *C08F2/44*(2006.01)i

According to International Patent Classification (IPC) or to both national classification and IPC

B. FIELDS SEARCHED

Minimum documentation searched (classification system followed by classification symbols)
C09K5/06, B01J13/14, C08F2/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-83289 A (Nisshin Steel Co., Ltd.), 23 April 2009 (23.04.2009), claims 1 to 6; examples (Family: none) | 1-19 |
| A | JP 2004-300424 A (Dainichiseika Color & Chemicals Mfg. Co., Ltd.), 28 October 2004 (28.10.2004), claims 1 to 20; examples (Family: none) | 1-19 |
| A | JP 2004-203978 A (Sekisui Chemical Co., Ltd.), 22 July 2004 (22.07.2004), claims 1 to 10; examples (Family: none) | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 April, 2014 (02.04.14) | 15 April, 2014 (15.04.14) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No. PCT/JP2014/050865

C (Continuation). DOCUMENTS CONSIDERED TO BE RELEVANT

| Category* | Citation of document, with indication, where appropriate, of the relevant passages | Relevant to claim No. |
|---|---|---|
| A | JP 62-225241 A (NOK Corp.), 03 October 1987 (03.10.1987), claims 1 to 14; page 2, lower left column, line 10 to page 3, lower right column, line 1; examples (Family: none) | 1-19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002516913 W
- JP 2004203978 A
- JP 2004277646 A
- JP 2006257415 A
- JP 2008144054 A
- JP 2009090191 A
- JP 2010150329 A
- JP 2012011384 A


### Non-patent literature cited in the description


- **TAKAYUKI OTSU.** Kobunshigosei no kagaku. Kagaku-Dojin Publishing Co., Inc, 1968
- **TAKAYUKI OTSU.** Kobunshigosei no kagaku,'' and ''Kisokobunshikagaku
- **TAKAYUKI OTSU.** Kobunshigosei no kagaku, '' and ''Kisokobunshikagaku